# EUROPÄISCHE PATENTSCHRIFT

(11) **EP 2 708 128 B1**
(45) Veröffentlichungstag und Bekanntmachung des Hinweises auf die Patenterteilung: **23.08.2017**
(21) Anmeldenummer: 13182884.0
(22) Anmeldetag: 03.09.2013
(51) Int. Cl.: A21B 3/04, F24C 14/00, F24C 15/20, F24C 15/32

(54) **Reinigungseinrichtung für einen Ofen und Ofen**
Cleaning apparatus for an oven and oven
Dispositif de nettoyage pour un four et four

(30) Priorität: 14.09.2012 DE 102012216407
(43) Veröffentlichungstag der Anmeldung: 19.03.2014
(73) Patentinhaber: E.G.O. Elektro-Gerätebau GmbH, 75038 Oberderdingen (DE)
(72) Erfinder: Wittenhagen, Wolfgang, 75015 Bretten (DE)
(74) Vertreter: Patentanwälte Ruff, Wilhelm, Beier, Dauster & Partner mbB

(56) Entgegenhaltungen:
- EP-A1- 1 029 200
- EP-A2- 1 378 711
- EP-A2- 1 693 622
- US-A1- 2009 050 129

## Beschreibung

### Anwendungsgebiet und Stand der Technik

Die Erfindung betrifft eine Reinigungsvorrichtung für einen Ofen, insbesondere für einen Backofen, sowie einen solchen Ofen selbst.

Aus der DE 3636622 A1 ist ein Ofen bekannt mit einem Heizgebläse für die Muffel, also ein sogenannter Heißluftofen. Ein Lüfterrad des Heizgebläses ist teilweise mit einem Katalysatorbelag beschichtet und ein ringförmiges Heizelement umgibt dieses Lüfterrad mit geringem radialem Abstand. Dadurch wird eine Katalysatorfunktion zur Reinigung der Luft im Ofen von Verunreinigungen, die insbesondere auch eine Geruchsbelästigung und Verschmutzung bewirken, verbessert, indem sie nämlich katalytisch unterstützt verbrannt werden. Die Integration des Katalysators in das Heizgebläse bewirkt eine geringe Baugröße.

Aus der WO 99/23421 A1 ist eine Reinigungsvorrichtung für den Einsatz in einem Restaurant bekannt, die eine rotierende Oxidationsvorrichtung aufweist. Diese ist mittels einer Rohrverbindung mit einem entfernt angeordneten Luftabzug verbunden. Die gereinigten Abgase werden mittels einer Lüftereinrichtung aus der Reinigungsvorrichtung abgesaugt und an die Außenumgebung abgegeben. Die Reinigungsvorrichtung weist dabei einen Katalysator auf.

Aus der US 2009/0050129 A1 ist eine katalytische Reinigungsvorrichtung für einen Ofen bekannt. Sie kann in einen Ofen eingebaut werden und die gereinigte Luft an die Außenumgebung, vorteilhaft oberhalb des Ofens, abgeben.

### Aufgabe und Lösung

Der Erfindung liegt die Aufgabe zugrunde, eine eingangs genannte Reinigungsvorrichtung sowie einen damit versehenen Ofen zu schaffen, mit denen Probleme des Standes der Technik beseitigt werden können und es insbesondere möglich ist, eine gute katalytische Reinigung der Luft im Ofen bzw. der Abluft zu erreichen bei gleichzeitiger einfacher konstruktiver Ausgestaltung.

Gelöst wird diese Aufgabe durch eine Reinigungsvorrichtung mit den Merkmalen des Anspruchs 1 sowie einen Ofen mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werde manche der genannten Merkmale nur für die Reinigungsvorrichtung oder nur für den Ofen genannt und erläutert. Sie sollen aber unabhängig davon sowohl für die Reinigungsvorrichtung als auch für den Ofen selbständig gelten können. Der Wortlaut der Ansprüche wird durch ausdrückliche Bezugnahme zum Inhalt der Beschreibung gemacht.

Es ist vorgesehen, dass die Reinigungsvorrichtung einen Einlass, einen Auslass, einen Katalysator samt Katalysatorheizung und einen Lüfter aufweist. Erfindungsgemäß ist die Reinigungsvorrichtung als von dem Ofen separate und eigenständig handhabbare Baueinheit bzw. als Modul mit den vorgenannten Teilen ausgebildet. Die Reinigungsvorrichtung ist zur Anordnung im Ofen in luftführender Verbindung mit einer Muffel des Ofens ausgebildet. Vorteilhaft ist der Ofen, insbesondere als Backofen für Haushalt oder Gewerbe, herkömmlich ausgebildet und kann besonders vorteilhaft auch als Heißluftofen ausgebildet sein. Somit sind im Ofen unter Umständen zwei Lüfter vorgesehen, wobei ein Lüfter für die Reinigungsvorrichtung nur eine geringe Leistung aufweisen muss.

Durch diese spezielle erfindungsgemäße Ausbildung ist es möglich, auch bereits bestehende Backöfen bzw. Konstruktionen von Öfen mit einer solchen katalytischen Reinigungsvorrichtung zu versehen. Durch deren Vormontage ist sowohl die Integration bzw. der Einbau in einen Ofen stark erleichtert als auch die Abstimmung der einzelnen Teile aufeinander optimiert.

Mit einer solchen Reinigungsvorrichtung ist sowohl eine katalytische Ofenluftreinigung als auch eine Geruchsreduktion während eines Pyrolysebetriebs sowie bei allen sonstigen Back- und Grillprozessen im Ofen möglich. Dies betrifft insbesondere Betriebsarten ohne Umluft wie Grillen, Ober- oder Unterhitze. Wenn die katalytisch gereinigte Luft wieder in den Ofen geführt wird bzw. Einlass und Auslass mit einer Muffel des Ofens verbunden sind und dazu in diese führen, so werden sowohl die gereinigte Luft als auch die Wärme einschließlich der Reaktionswärme im Katalysator wieder dem Ofen zugeführt und somit geht keine Wärme verloren. Dies verbessert auch die Energieeffizienz. In den Einlass wird Luft aus dem Ofen bzw. seiner Muffel eingesaugt, mit dem beheizten Katalysator gereinigt und dann durch den Auslass wieder in die Muffel zurückgeführt.

Selbst bei einem Betrieb des Ofens ohne Umluft oder Heißluft wird die durch den Lüfter der Reinigungsvorrichtung erzeugte geringe Konvektion als vorteilhaft für den Ofenbetrieb angesehen. Darüber hinaus ist es durch eine spezielle Ansteuerung möglich, aufgrund der üblicherweise geringen Leistung der Katalysatorheizung, welche unter rund 400 W liegen kann, vorteilhaft etwa 200 W betragen kann, für eine Warmhalte-oder Niedertemperatur-Garfunktion ausschließlich diese Katalysatorheizung zu verwenden. Weist diese eine Temperaturregelung auf, so ist auch eine relativ genaue Temperaturregelung in der Muffel möglich. So ist es leichter, konstant und gleichmäßig eine niedrige Temperatur in der Muffel zu erhalten als mit einem getakteten Heizkörper hoher Momentanleistung.

In weiterer Ausgestaltung der Erfindung kann vorgesehen sein, dass die Katalysatorheizung dem Katalysator direkt zugeordnet ist. So wird ihre Heizleistung möglichst vollständig dem Katalysator zugeführt zur Begünstigung oder Auslösung der katalytischen Reinigung der vorbeiströmenden Luft. Ein Katalysator ist allgemein wie üblich und vorteilhaft flächig ausgebildet, entweder mit mehreren Lamellen oder mit einer Gitterstruktur odgl.. Dies ist dem Fachmann aber grundsätzlich bekannt.

Einerseits ist es möglich, den Katalysator als Heizkatalysator auszubilden. Dabei können Katalysator und Katalysatorheizung vorteilhaft einteilig aufgebaut sein. Ein Heizelement als Katalysatorheizung kann direkt auf den Katalysator aufgebracht sein bzw. auf denselben Träger wie das Katalysatormaterial, insbesondere auf einen vorgenannten flächigen Träger. Hier ist der Wirkungsgrad besonders hoch, weil der Katalysator maximal gut durch die Katalysatorheizung aufgeheizt wird.

Andererseits ist es möglich, die Katalysatorheizung mit geringem Abstand, vorteilhaft von 0,5 cm bis 3 cm, vor dem Katalysator bzw. separat anzuordnen. Bei einer Anordnung im Luftweg zwischen Einlass und Auslass vor dem Katalysator ist der Wirkungsgrad besonders hoch.

Allgemein kann eine Katalysatorheizung vorteilhaft als Widerstandsheizelement ausgebildet sein, und zwar bei beiden vorgenannten Möglichkeiten. Bei der zweiten Möglichkeit kann eine Katalysatorheizung auch als Strahlungsheizelement ausgebildet sein mit ausreichend hohen Temperaturen für eine gute flächige Wärmeübertragung auf den Katalysator. Widerstandsheizelemente können Dickschichtwiderstände, Dünnschichtwiderstände, Widerstandsheizer oder Rohrheizkörper sein. Eine vorteilhafte Ausgestaltung der Katalysatorheizung als separates Teil ist ein Rohrheizkörper mit entsprechender Leistung, der zuverlässig arbeitet. Als Strahlungsheizelemente bieten sich freiliegende Heizwendeln bzw. Glühwendeln sowie ebenso Rohrheizkörper mit sehr hohen Betriebstemperaturen an, alternativ auch Halogenglühlampen, die eine Temperatur von etwa 250°C auf dem Katalysator bewirken können, welche notwendig sind für eine katalytische Reinigung. Ein weiterer Vorteil einer solchen Halogenglühlampe liegt darin, dass das von ihr erzeugte Licht nicht ausschließlich nur auf den Katalysator geworfen werden kann, sondern auch in das Innere der Muffel als Beleuchtung.

In Ausgestaltung der Erfindung ist es vorteilhaft, insbesondere bei einem Widerstandsheizelement als Katalysatorheizung, einen positiven Temperaturkoeffizienten des elektrischen Widerstands der Katalysatorheizung vorzusehen. So kann eine selbstbegrenzende Heizung erreicht werden, die bei zu hohen Temperaturen als Sicherheitsmerkmal quasi abschaltet. Ein eigener Temperatursensor muss dann nicht mehr zwingend vorgesehen sein.

Vorteilhaft kann eine eigene Steuerung vorgesehen sein für die Reinigungsvorrichtung, insbesondere mit mindestens einem eigenen Bedienelement. So kann sie autark bzw. selbstständig betrieben werden, insbesondere unabhängig von dem Backofen selbst. Des Weiteren kann sie so besonders gut und einfach nachrüstbar sein, insbesondere mit den Baueinheiten Bedieneinrichtung und Gehäuse. Die Steuerung weist vorteilhaft einen Microcontroller odgl. auf, so dass sie das wenigstens eine Bedienelement ansteuern und auswerten kann sowie den Motor des Lüfters und/oder die Katalysatorheizung ansteuern kann.

Es ist möglich, einen Temperatursensor vorzusehen, insbesondere nahe an dem Katalysator. Bevorzugt wird ein solcher Temperatursensor in einem Luftweg vom Einlass zum Auslass hinter dem Katalysator angeordnet, so dass er die Lufttemperatur hinter der Katalysatorheizung erfassen kann. Damit kann die Funktion des Katalysators überprüft werden. Des Weiteren kann eine vorgenannte Beheizung des Ofens mittels der Katalysatorheizung gesteuert werden. Als Temperatursensor bietet sich ein üblicher Temperaturfühler mit einem Widerstandselement an.

Vorteilhaft ist der Lüfter hinter dem Katalysator angeordnet, und zwar auf dem vorgenannten Luftweg vom Einlass zum Auslass. So kann der Lüfter die Luft durch den Katalysator ansaugen und dieser wird etwas weniger stark gekühlt. Ein Lüftermotor des Lüfters ist vorteilhaft außerhalb des Luftwegs bzw. außerhalb einer Luftführung oder einem Gehäuse der Reinigungsvorrichtung angeordnet, so dass er den darin herrschenden hohen Temperaturen nicht ausgesetzt ist.

Es ist möglich, einen vorgenannten Luftweg vom Einlass zum Auslass als weitgehend geschlossenen Kanal auszubilden. In diesem Kanal sind dann Katalysatorheizung, Katalysator und Lüfter angeordnet.

Vorteilhaft ist der vorgenannte Luftweg gebogen ausgestaltet, bevorzugt U-artig. So ist es möglich, dass Einlass und Auslass im Wesentlichen in dieselbe Richtung weisen und nicht weit voneinander entfernt sind bzw. benachbart angeordnet sind. Dies vereinfacht die Integration der Reinigungsvorrichtung als Baueinheit in den Ofen. Hier ist es zusätzlich noch möglich, durch ein Trennblech, ein Ablenkblech odgl. zwischen Einlass und Auslass im Ofen einen direkten Kurzschluss zu vermeiden. Die U-artige Ausgestaltung des Luftwegs bzw. des ihn bildenden Kanals ist vorteilhaft bezüglich der Baugröße und stellt genügend Raum zur Verfügung, die Komponenten der Reinigungsvorrichtung darin anzuordnen.

Ein vorgenanntes Gehäuse der Reinigungsvorrichtung kann im Wesentlichen geschlossen sein bis auf den Einlass und den Auslass bzw. deren Öffnungen. So kann eine gute Luftführung erreicht werden und ein Austreten von durch die Katalysatorheizung erwärmter Luft an nicht vorhergesehener Stelle wird vermieden. Dabei ist es des Weiteren aber auch möglich, dass im Luftweg eine Bypass-Öffnung vorgesehen ist. Diese ist vorteilhaft im Luftweg hinter dem Katalysator und vor dem Auslass vorgesehen, so dass aus ihr bereits gereinigte Luft ausgeblasen werden kann oder auch Luft eingesaugt werden kann. Diese Bypass-Öffnung kann in dem Ofen mit einer Luftzufuhr an die Umgebung ausgebildet sein bzw. sie kann an die Umgebung des Ofens angeschlossen werden. So kann ein kleiner Teil der gereinigten Luft in die Umgebung abgeleitet werden, was beispielsweise noch durch eine größenverstellbare Bypass-Öffnung variabel ausgebildet sein kann. Dies dient vor allem dazu, einen geringen Unterdruck im Inneren des Ofens bzw. in der Muffel zu erzeugen. So wird verhindert, dass geruchsbeladene Luft aus dem Backofen nach außen dringt.

Die Anbindung der vorgenannten Bypass-Öffnung an die Umgebung erfolgt vorteilhaft dort am Ofen, wo diese heiße Luft unschädlich ist bzw. auch leicht in die Umgebung abströmen kann. Eine Möglichkeit ist beispielsweise vorne unter dem Backofen oder an seiner Rückseite in einem ausreichend großen Raum hinter oder neben dem Ofen.

Die Reinigungsvorrichtung kann so in dem Ofen montiert werden, dass die Einlassöffnung und die Auslassöffnung, die vorteilhaft allgemein im Wesentlichen in derselben Ebene liegen, mit einer Muffel des Ofens verbunden werden. Insbesondere erfolgt dies an einer Rückwand der Muffel, da hier üblicherweise am meisten Platz vorhanden ist.

Elektrische Anschlüsse der Reinigungsvorrichtung können in einem einzigen Steckerblock zusammengefasst werden, wodurch sich ein Anschluss vereinfacht. Dies können Anschlüsse für den Lüfter bzw. den Lüftermotor, die Katalysatorheizung sowie den Temperatursensor sein.

In weiterer Ausgestaltung der Erfindung ist es vorteilhaft vorgesehen, dass die Baueinheit eine sie umgebende Wärmedämmung aufweist bzw. sie nach außen hin gedämmt ist. Eine solche Wärmedämmung kann besonders vorteilhaft ausgewählt werden aus der Gruppe metallisches Schichtmaterial, auf einem Aerogel basierende Masse oder bestehend aus Mineralfasern bzw. Glasfasern. Des Weiteren sind Schichtmaterialien wie Vermiculite verwendbar. Selbst Teile des Gehäuses können aus Vermiculite ausgebildet sein.

In weiterer Ausgestaltung der Erfindung ist es möglich, dass der Ofen ein Mikrowellenofen ist, und zwar sowohl für den Haushaltsbereich als auch für den professionellen Bereich.

Bei einem erfindungsgemäßen Verfahren zum Betrieb eines erfindungsgemäßen Ofens mit der Reinigungsvorrichtung kann beispielsweise mittels des vorgenannten Temperatursensors eine Steuerung die Katalysatorheizung auf eine bestimmte Temperatur regeln, welche die katalytische Verbrennung am Katalysator bewirkt. Ist die Heißluft im Ofen ausreichend heiß, so kann es unter Umständen auch reichen, mittels der Katalysatorheizung die katalytische Verbrennung am Katalysator einmal zu zünden. Diese kann dann automatisch weitergehen, während die Katalysatorheizung abgeschaltet werden kann. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine auseinander gezogene schräge Draufsicht auf eine erfindungsgemäße Reinigungsvorrichtung mit U-artiger Luftführung und
- Fig. 2: einen erfindungsgemäßen Backofen als Heißluftofen mit der Reinigungsvorrichtung aus Fig. 1.

### Detaillierte Beschreibung der Ausführungsbeispiele

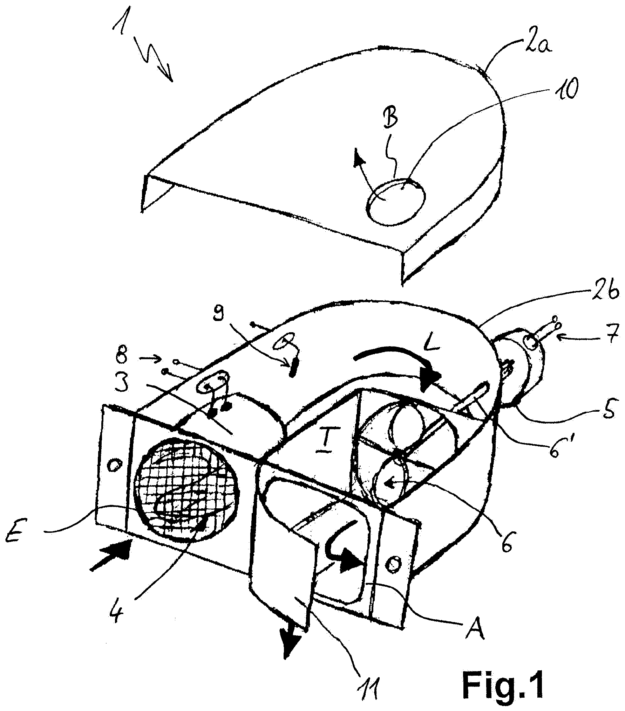

In der Fig. 1 ist in auseinandergezogener Darstellung eine erfindungsgemäße Reinigungsvorrichtung 1 gezeigt. Sie weist ein Gehäuse auf, das im Wesentlichen aus dem Gehäuseunterteil 2b und Gehäuseoberteil 2a besteht. Diese bestehen aus Blech und nach Zusammenfügen ergibt sich eine im Wesentlichen geschlossene Baueinheit bzw. ein Katalysatormodul, welches nach außen lediglich den Einlass E, den Auslass A und oben im Gehäuseoberteil 2a die Bypass-Öffnung B aufweist. Es ist auch zu erkennen, dass die Bypass-Öffnung B deutlich kleiner ist als Einlass E und Auslass A.

Im Gehäuseunterteil 2b ist hinter dem Einlass E die Katalysatorheizung 4 angeordnet, hier beispielsweise als geschlungen, schleifenartig oder mäanderförmig ausgebildeter Rohrheizkörper bekannter Bauart. Seine Leistung beträgt etwa 200 W. Die elektrischen Anschlüsse 8 der Katalysatorheizung 4 sind seitlich herausgeführt. Direkt dahinter ist der Katalysator 3 mit geringem Abstand, beispielsweise wenigen Millimetern bis 1 cm oder 2 cm, angeordnet. Auch der Katalysator kann wie im Stand der Technik ausgebildet sein, entweder flächig mit mehreren Lamellen, an denen die durch den Einlass E angesaugte Luft, die von der Katalysatorheizung 4 aufgeheizt ist, entlang strömt. Oder der Katalysator 3 ist netz- bzw. gitterartig ausgebildet mit einer Beschichtung aus Katalysatormaterial, wobei die Luft durch die Netz- bzw. Gittermaschen strömt.

Es ist zu erkennen, dass ein Luftweg L in der Reinigungsvorrichtung 1 bzw. dem Gehäuse in etwa U-artig verläuft. Die Luft tritt ein zum Einlass E und strömt dann vorbei an Katalysatorheizung 4 und Katalysator 3. Dort wird sie gereinigt und strömt danach an einem Temperatursensor 9 vorbei, dessen elektrischer Anschluss ebenfalls nach links außen geführt ist. Danach macht die Luft im Luftweg L eine Biegung um etwa 180° entsprechend dem Verlauf des unteren Gehäuseteils 2b, und zwar wird hier der Luftweg L durch das Trennblech T in zwei Wege oder Arme bzw. Teile geteilt, so dass er eben U-artig ist. Dazu wird die Luft von einem Lüfter 6 angesaugt, der mittels einer Lüfterwelle 6' von einem Lüftermotor 5 angetrieben ist. Der Lüfter 6 arbeitet also saugend. Die elektrischen Anschlüsse 7 des Lüftermotors 5 sind ebenfalls dargestellt.

Hinter dem Lüfter 6 strömt die Luft zum Auslass A und aus diesem heraus. Am Auslass A ist ein Ablenkblech 11 angeordnet. Dieses bewirkt eine nochmalige Umleitung der austretenden Luft zur Seite nach rechts und nach unten sowie oben. Vor allem soll durch das Ablenkblech 11 aber vermieden werden, dass die zum Auslass A ausströmende Luft gleich wieder am Einlass E eingesaugt wird. Dies ist unnötig, da sie schon gereinigt und auch aufgewärmt ist.

Es ist aus Fig. 1 zu erkennen, dass im Luftweg hinter dem Lüfter 6 auch etwas Luft zur Bypass-Öffnung B austritt, hier dargestellt durch einen dünneren Pfeil. Hierzu wird nachfolgend noch mehr ausgeführt.

Auch wenn hier dargestellt ist, dass die Anschlüsse 7, 8 und diejenigen des Temperatursensors 9 separat und entfernt voneinander angeordnet sind, so können sie doch zumindest innerhalb der Baueinheit der Reinigungsvorrichtung 1 auch zusammengeführt sein an einen einzigen Anschluss bzw. einen einzigen Steckerblock.

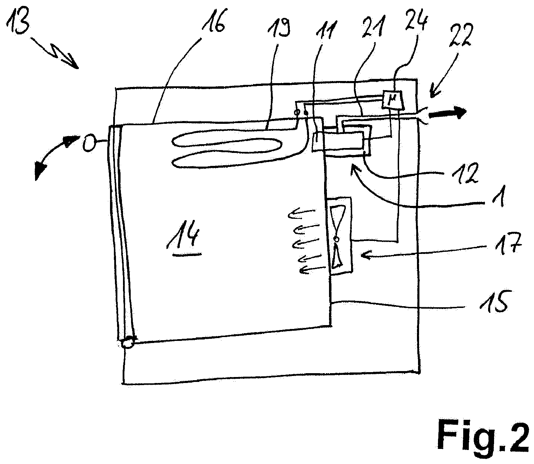

In Fig. 2 ist ein erfindungsgemäßer Ofen 13 mit einer Ofenmuffel 14 dargestellt samt Rückwand 15. An dieser Rückwand 15 der Muffel 14 ist ein übliches Heißluftgebläse 17 angeordnet, so dass der Ofen 13 ein Heißluftofen ist. Unter einer Decke 16 der Muffel 14 ist ein Heizkörper 19 angeordnet, beispielsweise als Grillheizkörper.

Oben an der Rückwand 15 ist von hinten eine erfindungsgemäße Reinigungsvorrichtung 1 als eigenständige Baueinheit bzw. eigenständiges Modul angesetzt an entsprechende Öffnungen, die zu dem Einlass E und dem Auslass A korrespondieren. Das Ablenkblech 11 ragt ein wenig in die Muffel 14 hinein, was aber nicht stört. Aus der Fig. 2 ist auch zu ersehen, dass die Reinigungsvorrichtung 1 von einer dicken Wärmedämmung umgeben ist, die beispielsweise auf eingangs genannte Art und Weise ausgebildet sein kann und insbesondere als eine Art Kasten aus Vermiculite ausgebildet ist.

Die Bypass-Öffnung B aus Fig. 1 ist mittels einer Luftleitung 21 an einen Bypass-Auslass 22 an der Rückseite des Ofens 13 geführt. So kann in diesem Bereich, der beim Einbau dieses Ofens 13 unkritisch ist für das Austreten von heißer Luft in geringen Mengen, die eingangs genannte Luft mittels der Bypass-Öffnung B aus dem Ofen 13 bzw. der Muffel 14 ausgelassen werden, unter Umständen mit einem Diffusor zur Verteilung. Vorteilhaft ist dabei auch die Luftleitung 21 thermisch gedämmt.

Des Weiteren ist in der Fig. 2 eine Steuerung 24 des Ofens 13 dargestellt. Diese ist sowohl mit der Heizung 19 als auch dem Lüfter 17 sowie der Reinigungsvorrichtung 1 verbunden, und zwar mit deren sämtlichen Funktionseinheiten. So kann die Steuerung 24 die vorbeschriebenen Betriebsarten in einem erfindungsgemäßen Verfahren zum Betrieb der Reinigungsvorrichtung 1 bzw. des Ofens 13 steuern. Insbesondere kann sie den Betrieb der Katalysatorheizung 4 und des Lüftermotors 5 steuern, beispielsweise abhängig von einer Messung am Temperatursensor 9 oder weiteren Temperatursensoren in der Muffel 14.

Alternative Beheizungsmöglichkeiten für den Katalysator 3 können auf vorgenannte Art und Weise vorgesehen sein, beispielsweise besonders vorteilhaft und allgemein als Halogenglühlampe. Aus der gemäß den Fig. 1 und 2 vorstellbaren Anordnung einer solchen Halogenglühlampe an der Rückseite der Muffel 14 wird deutlich, dass sie eine Beleuchtungsfunktion realisieren kann.

Neben einem in Fig. 2 dargestellten Ofen 13 als normaler Haushaltsbackofen kann eine erfindungsgemäße Reinigungsvorrichtung als Modul auch in einem großen, gewerblich genutzten Ofen angeordnet sein. Hier können auch mehrere solcher Module leicht montiert werden.

## Patentansprüche

1. Reinigungsvorrichtung (1) für einen Ofen (13), insbesondere einen Backofen, wobei die Reinigungsvorrichtung einen Einlass (E), einen Auslass (A), einen Katalysator (3) samt Katalysatorheizung (4) aufweist, wobei die Reinigungsvorrichtung (1) als von dem Ofen (13) separate und eigenständig handhabbare Baueinheit bzw. als Modul mit diesen Teilen ausgebildet ist zur Anordnung im Ofen in luftführender Verbindung mit einer Muffel (14) des Ofens, **dadurch gekennzeichnet, dass** die Reinigungsvorrichtung (1) einen Lüfter (6) aufweist.

2. Reinigungsvorrichtung nach Anspruch 1, **dadurch gekennzeichnet, dass** die Katalysatorheizung (4) dem Katalysator (3) direkt zugeordnet ist und insbesondere der Katalysator als Heizkatalysator ausgebildet ist, wobei vorzugsweise Katalysator (3) und Katalysatorheizung (4) einteilig aufgebaut sind.

3. Reinigungsvorrichtung nach Anspruch 2, **dadurch gekennzeichnet, dass** ein Heizelement als Katalysatorheizung auf den Katalysator aufgebracht ist bzw. auf denselben Träger wie das Katalysatormaterial.

4. Reinigungsvorrichtung nach Anspruch 1, **dadurch gekennzeichnet, dass** die Katalysatorheizung (4) mit etwas Abstand vor dem Katalysator (3) und separat davon angeordnet ist, vorzugsweise als Widerstandsheizelement und/oder als Strahlungsheizelement.

5. Reinigungsvorrichtung nach einem der vorhergehenden Ansprüche, **gekennzeichnet durch** eine eigene Steuerung, insbesondere mit mindestens einem eigenen Bedienelement, für einen autarken bzw. selbstständigen Betrieb der Reinigungsvorrichtung, wobei vorzugsweise die Steuerung einen Microcontroller odgl. aufweist.

6. Reinigungsvorrichtung nach einem der vorhergehenden Ansprüche, **dadurch gekennzeichnet, dass** mindestens ein Temperatursensor (9) vorgesehen ist, insbesondere nahe an dem Katalysator (3), vorzugsweise auf einem Luftweg vom Einlass (E) zum Auslass (A) hinter dem Katalysator.

7. Reinigungsvorrichtung nach einem der vorhergehenden Ansprüche, **dadurch gekennzeichnet, dass** der Lüfter (6) auf einem Luftweg (L) vom Einlass (E) zum Auslass (A) hinter dem Katalysator (3) angeordnet ist, vorzugsweise mit einem Lüftermotor (5) außerhalb des Luftwegs (L) bzw. einer Luftführung oder einem Gehäuse (2a, 2b) der Reinigungsvorrichtung (1).

8. Reinigungsvorrichtung nach einem der vorhergehenden Ansprüche, **dadurch gekennzeichnet, dass** ein Luftweg (L) vom Einlass (E) zum Auslass (A) ein weitgehend geschlossener Kanal zwischen Einlass und Auslass ist.

9. Reinigungsvorrichtung nach einem der vorhergehenden Ansprüche, **dadurch gekennzeichnet, dass** ein Luftweg (L) vom Einlass (E) zum Auslass (A) gebogen verläuft, vorzugsweise U-artig, wobei insbesondere Einlass und Auslass in dieselbe Richtung weisen.

10. Reinigungsvorrichtung nach einem der vorhergehenden Ansprüche, **gekennzeichnet durch** ein im Wesentlichen bis auf Einlass (E) und Auslass (A) geschlossenes Gehäuse (2a, 2b) mit integrierter Luftführung durch den Lüfter (6).

11. Reinigungsvorrichtung nach einem der vorhergehenden Ansprüche, **dadurch gekennzeichnet, dass** eine Bypass-Öffnung (B) vorgesehen ist im Luftweg (L) hinter dem Katalysator (3) und vor dem Auslass (A), wobei vorzugsweise die Bypass-Öffnung (B) zur Verbindung mit einer Luftzufuhr an die Umgebungsluft ausgebildet ist.

12. Reinigungsvorrichtung nach einem der vorhergehenden Ansprüche, **dadurch gekennzeichnet, dass** Einlassöffnung und Auslassöffnung mit einer Muffel (14) des Ofens (13) verbindbar ausgebildet sind.

13. Reinigungsvorrichtung nach einem der vorhergehenden Ansprüche, **dadurch gekennzeichnet, dass** die Baueinheit eine umgebende Wärmedämmung aufweist, vorzugsweise ausgewählt aus der Gruppe metallisches Schichtmaterial, auf einem Aerogel basierende Masse oder aus Mineralfasern bzw. Glasfasern bestehend.

14. Ofen, insbesondere Backofen (13), mit einer Reinigungsvorrichtung (1) nach einem der vorhergehenden Ansprüche, **dadurch gekennzeichnet, dass** die Reinigungsvorrichtung als Baueinheit in dem Ofen (13) angeordnet ist und Einlass (E) und Auslass (A) mit einer Muffel (14) des Ofens (13) verbunden sind bzw. in diese münden, insbesondere in einen oberen Bereich.

15. Ofen nach Anspruch 14, **dadurch gekennzeichnet, dass** die Reinigungsvorrichtung (1) nach Anspruch 11 eine Bypass-Öffnung (B) aufweist, die mit einer Luftzufuhr an die Umgebungsluft verbunden ist.

## Claims

1. Cleaning device (1) for an oven (13), in particular a baking oven, wherein the cleaning device includes an inlet (E), an outlet (A), a catalyst (3) together with a catalyst heater (4), wherein the cleaning device (1) is configured as a structural unit or module including said parts, separate from the oven (13) and to be handled independently, for arrangement within the oven in air-ducting connection to a muffle (14) of the oven, **characterized in that** the cleaning device (1) includes a ventilator (6).

2. Cleaning device according to claim 1, **characterized in that** the catalyst heater (4) is directly associated with the catalyst (3), and in particular the catalyst is a heating catalyst, wherein preferably catalyst (3) and catalyst heater (4) are in one piece.

3. Cleaning device according to claim 2, **characterized in that** a heating element as the catalyst heater is applied to the catalyst and/or the same carrier as the catalyst material.

4. Cleaning device according to claim 1, **characterized in that** the catalyst heater (4) is arranged with a certain distance upstream of the catalyst (3) and separate thereto, preferably in the form of a resistance heating element and/or a radiation heating element.

5. Cleaning device according to any of the preceding claims, **characterized by** a distinct control system, in particular including at least one distinct operating element, for autarkic or autonomous operation of the cleaning device, wherein preferably the control system includes a microcontroller or the like.

6. Cleaning device according to any of the preceding claims, **characterized in that** at least one temperature sensor (9) is provided, in particular close to the catalyst (3), preferably on an airway from the inlet (E) to the outlet (A) downstream of the catalyst.

7. Cleaning device according to any of the preceding claims, **characterized in that** the ventilator (6) is disposed on an airway (L) from the inlet (E) to the outlet (A) downstream of the catalyst, preferably with a ventilator motor (5) external to the airway (L) or an air conduit or a housing (2a, 2b) of the cleaning device (1).

8. Cleaning device according to any of the preceding claims, **characterized in that** an airway (L) from the inlet (E) to the outlet (A) is a largely closed duct between inlet and outlet.

9. Cleaning device according to any of the preceding claims, **characterized in that** an airway (L) from the inlet (E) to the outlet (A) has a curved shape, preferably a U-shape, wherein in particular inlet and outlet point in the same direction.

10. Cleaning device according to any of the preceding claims, **characterized by** an essentially closed housing (2a, 2b), except for inlet (E) and outlet (A), with integral air conduit through the ventilator (6).

11. Cleaning device according to any of the preceding claims, **characterized in that** a bypass opening (B) is provided in the airway (L) downstream of the catalyst (3) and upstream of the outlet (A), wherein preferably the bypass opening (B) is configured for connection to an air supply to environmental air.

12. Cleaning device according to any of the preceding claims, **characterized in that** inlet opening and outlet opening are configured to be connected to a muffle (14) of the oven (13).

13. Cleaning device according to any of the preceding claims, **characterized in that** the structural unit includes a surrounding thermal insulation, preferably selected from the group of metallic layer material, aerogel-based bulk material, or composed of mineral fibres and/or glass fibres.

14. Oven, in particular baking oven (13), having a cleaning device (1) according to any of the preceding claims, **characterized in that** the cleaning device is disposed as a structural unit within the oven (13) and inlet (E) and outlet (A) are connected to a muffle (14) of the oven (13) or lead therein, in particular in an upper region.

15. Oven according to claim 14, **characterized in that** the cleaning device (1) according to claim 11 includes a bypass opening (B) connected to an air supply to environmental air.

## Revendications

1. Dispositif de nettoyage (1) pour un four (13), en particulier un four de cuisson, selon lequel ledit dispositif de nettoyage présente une entrée (E), une sortie (A), ainsi qu'un catalyseur (3) équipé d'un chauffage de catalyseur (4) ;
selon lequel le dispositif de nettoyage (1) est conçu avec ces pièces sous la forme d'une unité de structure, respectivement sous la forme d'un module, lequel, respectivement laquelle peut être manié(e) de manière autonome et séparée par rapport au four (13), en vue de la disposition dans le four dans un raccordement avec un moufle (14) du four, lequel raccordement se présente sous la forme d'un conduit de ventilation ;
**caractérisé en ce que**
le dispositif de nettoyage (1) présente un ventilateur (6).

2. Dispositif de nettoyage selon la revendication 1, **caractérisé en ce que** le chauffage de catalyseur (4) est directement associé au catalyseur (3) et, en particulier, le catalyseur est conçu sous la forme d'un catalyseur chauffé, selon lequel le catalyseur (3) et le chauffage de catalyseur (4) forment de préférence une structure d'une seule pièce.

3. Dispositif de nettoyage selon la revendication 2, **caractérisé en ce qu'**un élément de chauffage est mis en place sur le catalyseur sous la forme d'un chauffage de catalyseur, respectivement sur le même support que le matériau du catalyseur.

4. Dispositif de nettoyage selon la revendication 1, **caractérisé en ce que** le chauffage de catalyseur (4) est disposé à une certaine distance devant le catalyseur (3) et s'en trouve séparé, et se présente de préférence sous la forme d'un élément de chauffage par résistance et/ou sous la forme d'un élément de chauffage par rayonnement.

5. Dispositif de nettoyage selon l'une des revendications précédentes, **caractérisé par** une propre commande, en particulier avec au moins un propre élément de commande, pour un fonctionnement en autarcie, respectivement autonome du dispositif de nettoyage, selon lequel la commande présente de préférence un microcontrôleur ou un élément similaire.

6. Dispositif de nettoyage selon l'une des revendications précédentes, **caractérisé en ce qu'**au moins un capteur de température (9) est prévu, lequel se trouve en particulier à proximité du catalyseur (3), de préférence sur un passage d'air allant de l'entrée (E) vers la sortie (A) et situé à l'arrière du catalyseur.

7. Dispositif de nettoyage selon l'une des revendications précédentes, **caractérisé en ce que** le ventilateur (6) est disposé sur un passage d'air (L) allant de l'entrée (E) vers la sortie (A) et situé à l'arrière du catalyseur (3), de préférence avec un moteur de ventilateur (5) qui se trouve à l'extérieur du passage d'air (L), respectivement d'une conduite de ventilation ou d'un boîtier (2a, 2b) du dispositif de nettoyage (1).

8. Dispositif de nettoyage selon l'une des revendications précédentes, **caractérisé en ce qu'**un passage d'air (L) allant de l'entrée (E) vers la sortie (A) est un canal, lequel est en grande partie fermé et lequel se trouve entre l'entrée et la sortie.

9. Dispositif de nettoyage selon l'une des revendications précédentes, **caractérisé en ce qu'**un passage d'air (L) allant de l'entrée (E) vers la sortie (A) court en formant un arc et, de préférence, est en forme de « U », selon lequel en particulier l'entrée et la sortie sont orientées dans la même direction.

10. Dispositif de nettoyage selon l'une des revendications précédentes, **caractérisé par** un boîtier (2a, 2b) qui est pour l'essentiel fermé, à l'exception de l'entrée (E) et de la sortie (A), lequel boîtier (2a, 2b) présente une conduite de ventilation intégrée par l'intermédiaire du ventilateur (6).

11. Dispositif de nettoyage selon l'une des revendications précédentes, **caractérisé en ce qu'**une ouverture de dérivation (B) est prévue dans le passage d'air (L) à l'arrière du catalyseur (3) et devant la sortie (A), selon lequel l'ouverture de dérivation (B) est conçue de préférence avec une alimentation en air en vue du raccordement à l'air ambiant.

12. Dispositif de nettoyage selon l'une des revendications précédentes, **caractérisé en ce que** l'ouverture d'entrée et l'ouverture de sortie sont conçues de manière à pouvoir être raccordées à un moufle (14) du four (13).

13. Dispositif de nettoyage selon l'une des revendications précédentes, **caractérisé en ce que** l'unité de structure est enveloppée par une isolation thermique qui est sélectionnée de préférence à partir du groupe constitué par le matériau métallique en couches, une masse à base d'aérogel ou à partir de fibres minérales, respectivement de fibres de verre.

14. Four, en particulier un four de cuisson (13), avec un dispositif de nettoyage (1) selon l'une des revendications précédentes, **caractérisé en ce que** ledit dispositif de nettoyage (1) est disposé dans le four (13) sous la forme d'une unité de structure et **en ce qu'**une entrée (E) et une sortie (A) sont reliées avec un moufle (14) du four (13), respectivement débouchent dans le moufle (14) du four (13), en particulier dans une zone supérieure.

15. Four selon la revendication 14, **caractérisé en ce que** le dispositif de nettoyage (1) selon la revendication 11 présente une ouverture de dérivation (B), laquelle est raccordée à l'air ambiant par l'intermédiaire d'une alimentation en air.
